# FASCICULE DE BREVET EUROPEEN

(11) **EP 3 217 415 B1**
(45) Date de publication et mention de la délivrance du brevet: **20.03.2019**
(21) Numéro de dépôt: 17157254.8
(22) Date de dépôt: 21.02.2017
(51) Int. Cl.: H01H 19/58, B60S 1/08, H01H 1/40

(54) **ROUE POUR UN SYSTÈME D'ENTRAÎNEMENT D'ESSUIE-GLACE DE VÉHICULE**
RAD FÜR EIN ANTRIEBSSYSTEM VON SCHEIBENWISCHERN EINES FAHRZEUGS
WHEEL FOR A VEHICLE WINDOW WIPER DRIVE SYSTEM

(30) Priorité: 07.03.2016 FR 1651867
(43) Date de publication de la demande: 13.09.2017
(73) Titulaire: Valeo Systèmes d'Essuyage, 78322 Le Mesnil Saint Denis (FR)
(72) Inventeur: SERVIN, Alain, 86190 Villiers (FR); COLLINET, Laurent, 86270 La Roche Posay (FR); BEAUCHAMPS, Stéphane, 86180 Bruxerolles (FR)
(74) Mandataire: Vincent, Catherine Marie Marguerite

(56) Documents cités:
- FR-A1- 2 830 672
- US-A1- 2007 193 861
- US-A1- 2013 049 499

## Description

L'invention concerne une roue pour un mécanisme d'entraînement d'essuie-glace, par exemple d'essuie-glace arrière de véhicule, un boîtier renfermant un tel mécanisme et un système d'entraînement d'essuie-glace comportant un moteur et un tel boîtier.

Les systèmes d'essuie-glace, en particulier ceux équipant les véhicules automobiles, comportent un système de pilotage du mouvement de va- et-vient du balai d'essuie-glace comportant un moteur. Dans certains cas, par exemple dans le cas de l'essuie-glace arrière, le système comporte en outre un dispositif de bielles pour transformer le mouvement rotatif du moteur en un mouvement alternatif pour le balai d'essuie-glace.

Par ailleurs, un tel système doit comporter un dispositif permettant à l'essuie-glace de se mettre en position de repos lorsque l'utilisateur arrête le fonctionnement de l'essuie-glace. En effet, cette interruption peut se produire à toute position de l'essuie-glace sur la vitre, alors qu'il doit nécessairement rejoindre sa position de repos avant de s'arrêter définitivement.

A cette fin on connaît des dispositifs comportant un interrupteur rotatif monté sur une roue solidaire du moteur et installé en parallèle de l'interrupteur de commande de l'essuie-glace. Ainsi, le moteur continue d'être alimenté jusqu'à ce que l'interrupteur rotatif détecte une position de repos de l'essuie-glace et coupe l'alimentation du moteur (par exemple FR 2 830 672 et FR 2 830 673). Un autre interrupteur peur intervenir pour mettre le moteur en court-circuit et ainsi le stopper immédiatement afin d'éviter l'effet d'inertie.

De tels interrupteurs comportent généralement une came annulaire métallique montée sur une roue entraînée par le moteur ainsi que des éléments de contact (ou frotteurs) qui frottent chacun sur une piste, continue ou non, de cette came.

Du fait de la présence des éléments d'embiellage et de l'encombrement des frotteurs, ces derniers ainsi que la came sont généralement situés sur la face de la roue opposée aux éléments d'embiellage. De ce fait, le boîtier (appelé plus loin boîtier réducteur) renfermant la roue, les éléments d'embiellage et les frotteurs est relativement volumineux.

Par ailleurs, la présence à bord des véhicules automobiles de contrôleurs de toutes les fonctions électriques du véhicule, appelés « body controller », a modifié la conception des dispositifs de mise en position de repos des essuie-glaces. En effet, le moteur est alors directement commandé par le contrôleur et non plus par un interrupteur rotatif. Il suffit alors que le contrôleur reçoive une information concernant la position de l'essuie-glace sur la vitre, ce qui lui permet de gérer son arrêt en position de repos. Cette information n'a pas besoin d'être continue, il suffit d'une information ponctuelle, par exemple un pic de tension (un « top ») au moment où l'essuie-glace s'approche de sa position de repos.

L'invention cherche à tirer parti de l'existence d'un contrôleur dans un véhicule pour réduire le volume du boîtier réducteur et pour faire des économies de matière.

A cet effet, l'invention propose une roue pour un système d'entraînement d'essuie-glace de véhicule selon la revendication 1.

Dans l'invention, les moyens de contact électrique sont situés sur la face de la roue destinée à porter l'embiellage et ils sont d'extension angulaire limitée dans le plan de la roue. En tout état de cause, la présence de l'embiellage sur cette face de la roue contraint fortement l'implantation des moyens de contact électrique et des frotteurs. On trouve un tel embiellage par exemple sur les systèmes d'essuie-glace arrière.

On réalise ainsi un gain de place et un gain de matière.

Les moyens de contact électrique comportent au moins un premier et un second moyen de contact électrique.

La roue est généralement constituée d'un matériau non conducteur, par exemple une matière plastique, et fabriquée par moulage. Les moyens de contact électrique peuvent être fixés au matériau non conducteur par tout moyen connus, notamment et de façon non limitative par surmoulage, rivetage plastique à chaud, collage...

Les frotteurs sont prévus, en fonctionnement, pour frotter sur la roue et notamment sur les moyens de contact électrique dans une position angulaire de la roue. Lorsque les frotteurs passent sur les moyens de contact électrique, du fait que ces moyens de contact sont reliés par un conducteur, ils ferment le contact entre les frotteurs et envoient un pic de courant ou de tension au contrôleur. Ce pic de courant ou de tension fournit au contrôleur une information sur la position angulaire de la roue.

Avantageusement, l'extension angulaire dans le plan de la roue des moyens de contact électrique peut être inférieure à 180°, de préférence inférieure à 90°, voire inférieure à 45°.

L'invention propose plusieurs modes de réalisation pour les moyens de contact électrique, en particulier les premier et second moyens de contact électrique :
- Ils peuvent être confondus et former un plot conducteur unique ; dans ce cas l'extension angulaire est celle du plot et elle peut être très faible, notamment si ce plot prend la forme d'une barrette disposée radialement ;
- Ils peuvent ne pas être confondus et comporter chacun un plot reliés par un conducteur ; de tels plots peuvent prendre la forme de barrettes ou de plaques métalliques de faibles dimensions reliées par un fil conducteur ou une piste métallique ;
- La roue peut comporter un segment en arc de cercle électriquement conducteur formant le premier moyen de contact électrique, le segment en arc de cercle comportant une excroissance radiale, l'excroissance radiale formant le second moyen de contact ; dans ce cas le premier et le second moyen de contact forment une « mini-came », c'est-à-dire une came d'extension angulaire limitée dans le plan de la roue, strictement inférieure à 360°, par exemple voisine de 90°; le conducteur reliant les deux moyens de contact électrique est le segment en arc de cercle lui-même.

Avantageusement, la face de la roue peut comporter une première piste et une seconde piste pour un frotteur respectif, la première piste étant formée en partie par le segment en arc de cercle et la seconde piste étant formée en partie par l'excroissance.

Des frotteurs sont prévus, en fonctionnement, pour frotter sur la face de la roue prévue pour recevoir l'embiellage et les moyens de contact. Quelle que soit la conformation des moyens de contact électrique, il est avantageux de prévoir sur cette face de la roue des pistes spécialement aménagées pour permettre aux frotteurs de frotter sans détériorer la roue. Dans le cas où les moyens de contact électrique comportent un segment en arc de cercle, le segment lui-même peut former une partie de la première piste pour un premier frotteur, l'extension formant une partie de la seconde piste pour un second frotteur.

Il existe donc un secteur angulaire dans lequel le second frotteur frotte sur le matériau non conducteur de la roue mais au voisinage du segment annulaire, ce qui peut poser des problèmes de court-circuit intempestif entre les frotteurs.

Avantageusement, le segment en arc de cercle peut s'étendre le long d'une nervure circulaire ménagée sur la face de la roue, ladite nervure circulaire étant prévue pour isoler électriquement les frotteurs lorsqu'ils frottent sur une piste respective de la roue.

Cette nervure, par exemple composée de la même matière non conductrice que la roue, permet d'isoler les frotteurs l'un de l'autre lorsqu'ils frottent sur leur piste respective.

Avantageusement, la nervure peut comporter une interruption, l'excroissance occupant au moins en partie ladite interruption.

Avantageusement, la nervure peut porter l'une des pistes.

Dans ce cas, les deux frotteurs sont, en fonctionnement, décalés dans une direction axiale, évitant ainsi les courts-circuits intempestifs.

Avantageusement, la face de la roue peut comporter une première piste et une seconde piste pour un frotteur respectif, la première piste étant formée en partie par le segment en arc de cercle et la seconde piste étant formée en partie par l'excroissance, de façon à faciliter la « montée » et/ou la « descente » du frotteur de la piste surélevée par rapport au plan de la roue.

Alternativement, la nervure peut s'étendre entre la première et la seconde piste.

Dans ce cas, les deux frotteurs sont, en fonctionnement, séparés par une nervure, qui peut être plus étroite que dans le mode de réalisation précédent.

L'invention porte également sur un boîtier réducteur pour un système d'entraînement d'essuie-glace de véhicule comportant une roue selon l'invention, par exemple un système d'entraînement d'essuie-glace arrière.

Avantageusement, le boîtier peut comporter un couvercle, la face interne dudit couvercle comportant un premier et un second frotteur conducteurs de l'électricité, une extrémité du premier frotteur étant prévue pour entrer en contact avec le premier contact électrique et une extrémité du second frotteur étant prévue pour entrer en contact avec le second contact électrique dans une position de la roue et lorsque le couvercle est fermé.

Avantageusement, la position radiale de l'extrémité du premier frotteur peut être identique à celle du premier contact électrique et la position radiale de l'extrémité du second frotteur peut être identique à celle du second contact électrique, et le secteur angulaire compris entre les extrémités du premier et du second frotteur peut être égal au secteur angulaire compris entre les premier et second contacts électriques.

L'invention porte également sur un système d'entraînement d'essuie-glace de véhicule comportant un moteur et un boîtier réducteur comme précédemment décrit.

L'invention porte également sur un système d'essuyage de véhicule, comprenant un tel système d'entraînement et au moins un balai d'essuie-glace.

Des modes de réalisation et des variantes seront décrits ci-après, à titre d'exemples non limitatifs, avec référence aux dessins annexés dans lesquels :
La figure 1 représente en perspective une roue pour un système d'entraînement d'essuie-glace de véhicule comportant un plot unique,
La figure 2 représente en perspective la roue comportant deux plots angulairement décalés,
La figure 3 représente en perspective la roue comportant un segment annulaire avec une excroissance,
La figure 4 représente en perspective une vue agrandie de la zone de contact des frotteurs illustrant un mode de réalisation avec une nervure,
Les figures 5A à 5C représentent de façon schématique trois modes de réalisation du segment annulaire et d'une nervure vus en plan,
La figure 6 représente en perspective un système d'entraînement d'essuie-glace de véhicule comportant un moteur et un boîtier réducteur, le couvercle du réducteur étant enlevé, et
La figure 7 est une vue schématique en perspective d'un système d'essuyage d'une vitre de véhicule faisant usage du système d'entraînement d'essuie-glace de la figure 6.

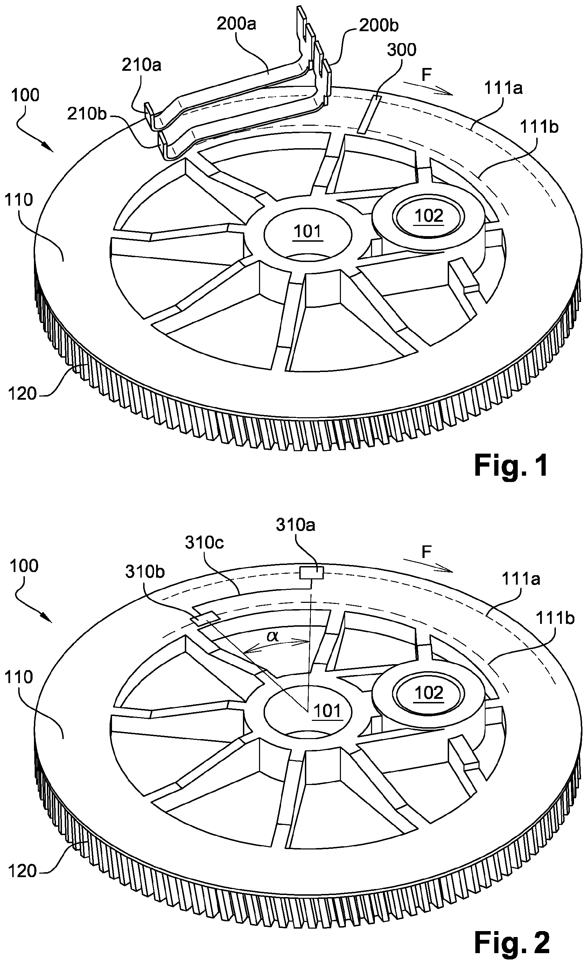

La figure 1 illustre une roue 100 pour un système d'entraînement d'essuie-glace de véhicule, comportant un moyeu 101 axial et un logement excentré 102 pour une bielle, susceptible d'être entraînée dans le sens de la flèche F. A cet effet, elle comporte des dents ou crans 120 sur sa périphérie en vue de son entraînement par engrenage, mais elle pourrait être entraînée par tout autre moyen.

On a également représenté un premier et un second frotteur 200a, 200b, qui ne sont pas solidaires de la roue mais sont utiles à la compréhension de l'invention. Les extrémités 210a, 210b des frotteurs sont prévues, en fonctionnement, pour frotter sur une portion annulaire 110 de la roue, située dans l'exemple de la figure 1 en bordure de la roue 100. Cette portion annulaire 110 matérialise en fait une première et une seconde piste 111a, 111b pour un frotteur respectif 200a, 200b, représentés parallèles, la première piste 111a étant la piste extérieure, représentée (partiellement) en tirets courts, la seconde piste 111b étant la piste intérieure, représentée (partiellement) en tirets longs. La roue 100 est réalisée en matériau non conducteur de sorte que le circuit entre les frotteurs est ouvert lorsqu'ils frottent sur leur piste respective.

La roue 100 ici illustrée comporte des moyens de contact électrique comportant un premier un second moyen de contact électrique qui sont confondus et forment un plot conducteur unique 300,La portion annulaire 110 comporte le plot 300 conducteur de l'électricité, par exemple métallique, formant moyen de contact électrique, disposé de sorte à recouvrir la première et la seconde piste. Lorsque, au cours de la rotation de la roue 100, les extrémités 210a, 210b passent sur le plot 300, cela met en court-circuit le premier et le second frotteur et créé une impulsion ou « top » pour un contrôleur placé plus en aval et non représenté. Cette impulsion fournit au contrôleur une information de position angulaire de la roue et donc du balai d'essuie-glace.

Dans l'exemple de la figure 1, le plot unique 300 est disposé radialement, de sorte que son extension angulaire est limitée à quelques degrés. Il peut être fixé sur la roue par tout moyen connu (collage...). Il peut dépasser légèrement du plan de la portion annulaire 110 ou être logé dans une rainure de la portion annulaire 110 de façon à ne pas dépasser.

Un inconvénient de ce mode de réalisation est que les frotteurs, même s'ils ne sont pas parallèles, sont très proches, ce qui d'une part n'est pas toujours compatible avec l'encombrement des frotteurs, d'autre part risque de créer des courts-circuits intempestifs entre les frotteurs.

La figure 2 illustre un deuxième mode de réalisation de la roue 100 dans laquelle les frotteurs ont été omis pour plus de clarté. Dans ce second mode de réalisation, la roue 100 comporte des moyens de contact électrique comportant un premier plot 310a formant un premier moyen de contact électrique et un second plot 310b formant un second moyen de contact électrique. La roue 100 comporte une portion annulaire 110 comportant une première et une seconde piste 111a, 111b. La première piste 111a comporte le premier plot 310a et la seconde piste comporte le second plot 310b, conducteurs de l'électricité, décalés angulairement mais reliés par un conducteur 310c, fixés à la portion annulaire par tout moyen connu ; le fil conducteur 310c peut par exemple être logé dans une gorge ménagée dans la face de la roue prévue pour recevoir un embiellage. Les plots peuvent consister en des barrettes, des plaques de contact ou autre. Tel que représentés, le premier et le second plot 310a, 310b sont angulairement décalés d'un angle α voisin de 45°.

Dans ce mode de réalisation, les extrémités 210a, 210b des frotteurs sont décalées du même angle α de façon à passer de façon simultanée sur un plot respectif 310a, 310b lors de la rotation de la roue 100. Comme dans le premier mode de réalisation, le passage simultané des extrémités des frotteurs sur un plot respectif met les frotteurs en court-circuit.

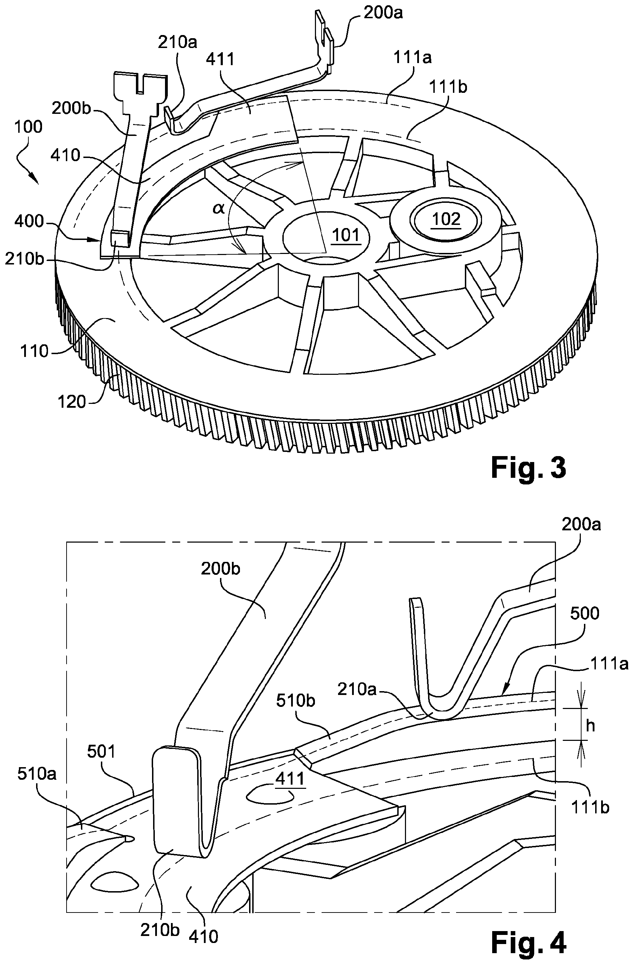

La figure 3 illustre un troisième mode de réalisation de la roue 100. Dans ce mode de réalisation, les moyens de contact électriques 400 comportent un segment en arc de cercle 410 ou mini-came, conducteur, par exemple métallique, fixé sur la portion annulaire 110 par tout moyen connu (collage, rivetage plastique à chaud...) et formant le premier moyen de contact électrique. Le segment en arc de cercle 410 comporte un bord dit « intérieur » tourné vers l'axe de rotation de la roue et un bord dit « extérieur », tourné vers le bord de la roue. Un tel segment en arc de cercle est généralement disposé au voisinage du bord de la roue pour une meilleure précision de la mesure.

Le segment en arc de cercle 410 comporte une excroissance radiale 411 sur un bord, ici son bord extérieur et formant le second moyen de contact électrique. La première piste 111a du premier frotteur 200a emprunte l'excroissance 411, la seconde piste 111b du second frotteur 200b emprunte le segment en arc de cercle 410. Un contact électrique s'établit entre le premier et le second frotteur lorsque leurs extrémités respectives frottent sur le segment en arc de cercle 410 et l'excroissance 411.

Dans ce mode de réalisation, le premier moyen de contact électrique 410 et le conducteur reliant le premier et le second moyen de contact électrique sont confondus.

Tel que représenté, l'extension angulaire α des moyens de contact électriques 400, qui correspond ici à celle du segment en arc de cercle 410, est voisin de 90°.

Comme il est visible sur la figure 3, il existe des positions angulaires de la roue dans lesquelles l'extrémité 210a du premier frotteur 200a est très proche du bord extérieur du segment en arc de cercle 410, et donc dans lesquelles il existe un risque de court-circuit intempestif entre les frotteurs. L'invention propose plusieurs solutions pour éviter ce risque.

La figure 4 illustre une première variante du troisième mode de réalisation. Dans cette variante, la face de la roue prévue pour recevoir un embiellage comporte une nervure circulaire 500 qui s'élève du plan de la roue et donc de la portion annulaire 110 d'une hauteur h. Elle est suffisamment large pour porter à son sommet la première piste 111a. La nervure 500 comporte une interruption 501, dans laquelle prend place l'excroissance 411 du segment en arc de cercle 410, cette excroissance faisant partie de la première piste 111a.

De cette façon, lorsqu'elle frotte sur la nervure 500, l'extrémité 210a du premier frotteur 200a est écartée dans le sens axial de l'extrémité 210b du second frotteur 200b, évitant le risque de court-circuit intempestif.

Dans la figure 4 la nervure 500 forme un bord relevé de la roue 100, mais elle pourrait être disposée à tout autre emplacement de la face de la roue.

Afin de faciliter le passage de l'extrémité 210a du premier frotteur 200a du sommet de la nervure 500 à l'excroissance 411 et réciproquement, chaque extrémité de l'interruption 501 de la nervure 500 comporte une rampe 510a, 510b.

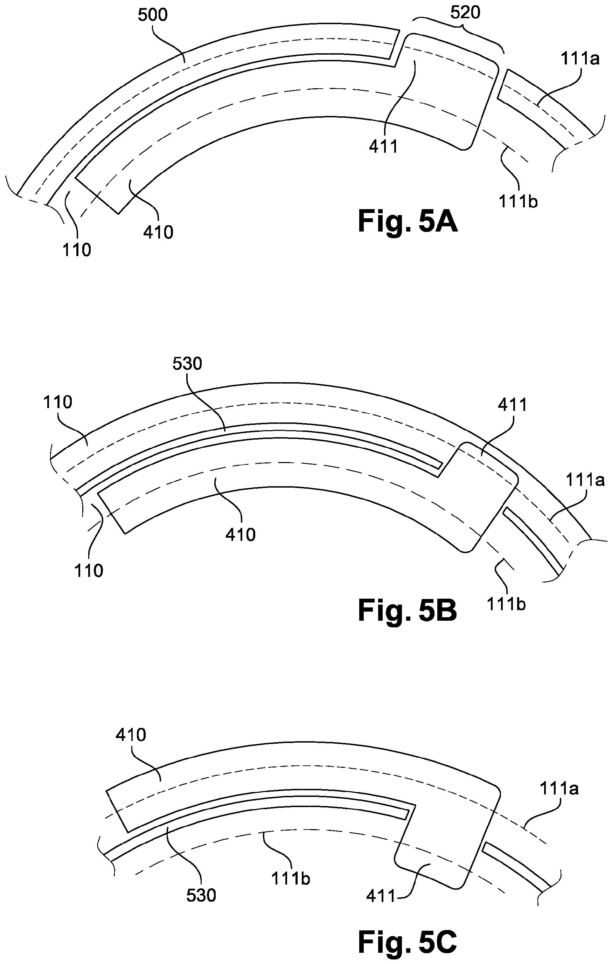

Cette variante est représentée de façon schématique en vue de dessus sur la figure 5A.

La figure 5B illustre une variante du troisième mode de réalisation. Dans cette variante, une nervure 530 étroite s'élève au-dessus de la portion annulaire 110 et s'étend le long du bord externe du segment en arc de cercle 410, la nervure et le segment étant de préférence au contact l'un de l'autre. La nervure s'étend donc entre les deux pistes 111a et 111b.

En fonctionnement, les frotteurs frottent tous les deux sur la portion annulaire 110 de la roue 100 et la nervure assure l'isolation électrique entre les deux frotteurs 200a, 200b. Comme dans la variante précédente, la nervure 530 comporte une interruption pour permettre l'intégration de l'excroissance 411 à la première piste 111a.

La figure 5C illustre une autre variante du troisième mode de réalisation. Dans cette variante, la nervure étroite 530 s'étend le long du bord interne du segment en arc de cercle métallique 410. La nervure s'étend encore entre les deux pistes 111a et 111b et assure l'isolation électrique entre les deux frotteurs 200a, 200b. Elle comporte une interruption pour permettre l'intégration de l'excroissance 411 à la seconde piste 111b.

Dans les variantes des figures 5B et 5C, la nervure 530 est écartée du bord de la roue 100.

Dans une autre variante (non représentée), la nervure 500 est située le long du bord interne du segment en arc de cercle 410, elle porte alors la seconde piste 111b.

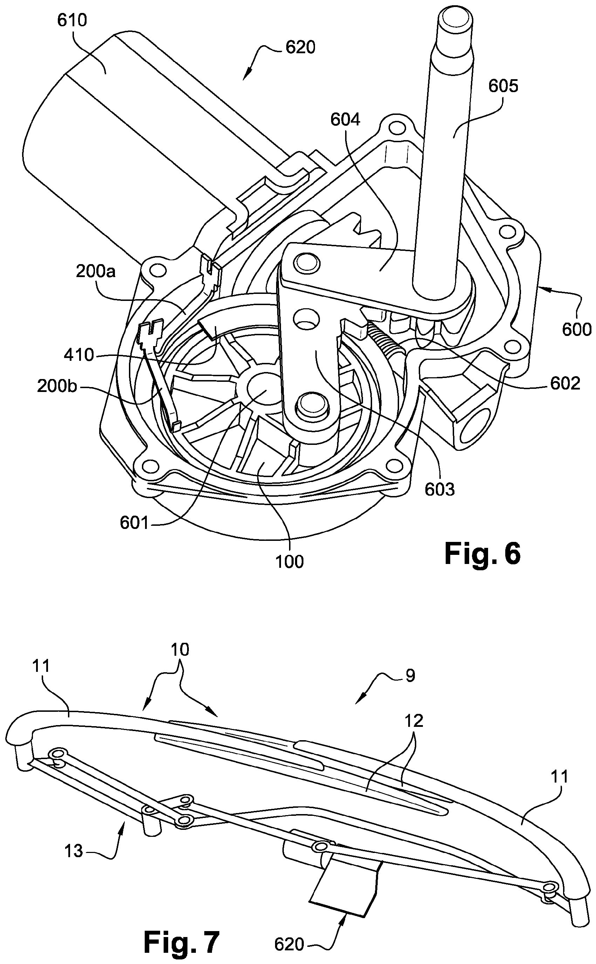

La figure 6 représente un système d'entraînement 620 de balai d'essuie-glace de véhicule comportant une roue 100 selon l'invention. Ce système comporte un boîtier réducteur 600 et un moteur 610. La roue 100 est logée dans un espace du boîtier, elle est montée rotative autour d'un axe 601 qui prend place dans son moyeu 101. Elle comporte un segment en arc de cercle 410 selon le troisième mode de réalisation. On a également représenté le premier et le second frotteur 200a, 200b, qui sont solidaires d'un couvercle du boîtier 610 non représenté pour plus de clarté. Une vis sans fin 602 entraînée par le moteur 610 s'engraine sur les crans 120 de la roue 100. Le boîtier comporte en outre un embiellage composé de deux bras, un premier bras 603 monté rotatif dans le logement excentré 102 de la roue et dont une extrémité s'engraine avec une roue dentée solidaire d'une tige 605 d'entraînement du balai d'essuie-glace, et un second bras 604 monté rotatif sur le premier bras 603 et autour de la tige 620.

Le figure 7 représente un système d'essuyage 9 comportant ici deux essuie-glaces 10 comportant chacun un bras d'entraînement 11 dont une extrémité est reliée à un balai 12 et dont l'extrémité opposée est reliée par un système de tringlerie ou timonerie 13 à un arbre de sortie du système d'entraînement 620, tel que celui de la figure 6.

## Revendications

1. Roue (100) pour un système d'entraînement d'essuie-glace de véhicule, ladite roue étant réalisée dans un matériau non conducteur et comportant des pistes de frottement pour des frotteurs (200a, 200b) ainsi que des moyens de contact électrique (300,400), un premier et un second moyen de contact électrique (300, 310a, 310b, 410, 411) desdits moyens de contact électrique étant en continuité électrique, le premier et le second moyen de contact électrique, respectivement agencés sur une première et une deuxième piste de frottement et étant de la sorte prévus pour entrer en contact avec un frotteur respectif (200a, 200b), ladite roue étant **caractérisée en ce que** l'extension angulaire (α) dans le plan de la roue desdits moyens de contact électrique est strictement inférieure à 360° et **en ce que** lesdits moyens de contact électrique sont situés sur une face de la roue prévue pour recevoir un embiellage (603, 604).

2. Roue selon la revendication 1, **caractérisée en ce que** l'extension angulaire (α) dans le plan de la roue des moyens de contact électrique (300, 310a, 310b, 410, 411) est inférieure à 180°, de préférence inférieure à 90°, voire inférieure à 45°.

3. Roue selon l'une des revendications 1 ou 2, **caractérisée en ce que** le premier et le second moyens de contact électrique sont confondus et forment un plot conducteur unique (300), avantageusement disposé radialement.

4. Roue selon l'une des revendications 1 ou 2, **caractérisée en ce que** le premier et le second moyens de contact électrique comportent chacun un plot (310a, 310b) reliés par un conducteur (310c).

5. Roue selon l'une des revendications 1 ou 2, **caractérisée en ce qu'**elle comporte un segment en arc de cercle (410) électriquement conducteur formant le premier moyen de contact électrique, ledit segment arc de cercle comportant une excroissance radiale (411) formant le second moyen de contact électrique.

6. Roue selon la revendication 5, **caractérisée en ce que** la face de la roue comporte une première piste (111a) et une seconde piste (111b) pour un frotteur respectif (200a, 200b), la première piste étant formée en partie par le segment en arc de cercle (410) et la seconde piste étant formée en partie par l'excroissance (411).

7. Roue selon la revendication 6, **caractérisée en ce que** le segment en arc de cercle (410) s'étend le long d'une nervure circulaire (500, 530) ménagée sur la face de la roue (100), ladite nervure circulaire étant prévue pour isoler électriquement les frotteurs (200a, 200b) lorsqu'ils frottent sur une piste respective (111a, 111b) de la roue.

8. Roue selon la revendication 7, **caractérisée en ce que** la nervure (500, 530) comporte une interruption (501), l'excroissance (411) occupant au moins en partie ladite interruption.

9. Roue selon l'une des revendications 7 ou 8, **caractérisée en ce que** la nervure (500) porte l'une des pistes (111a, 111b).

10. Roue selon la revendication 9, **caractérisée en ce qu'**au moins une des extrémités de l'interruption (501) forme une rampe (510a, 510b).

11. Roue selon l'une des revendications 7 ou 8, **caractérisée en ce que** la nervure (530) s'étend entre la première et la seconde piste (111a, 111b).

12. Boîtier réducteur (600) pour un système d'entraînement d'essuie-glace de véhicule comportant une roue (100) selon l'une des revendications précédentes.

13. Boîtier réducteur selon la revendication 12, **caractérisé en ce qu'**il comporte un couvercle, la face interne dudit couvercle comportant un premier et un second frotteur (200a, 200b) conducteurs de l'électricité, une extrémité (210a) du premier frotteur étant prévue pour entrer en contact avec le premier contact électrique (300, 310a, 411) et une extrémité (210b) du second frotteur (200b) étant prévue pour entrer en contact avec le second contact électrique (300, 310b, 410) dans une position de la roue et lorsque le couvercle est fermé.

14. Boîtier réducteur selon la revendication 13, **caractérisé en ce que** :
- la position radiale de l'extrémité (210a) du premier frotteur (200a) est identique à celle du premier contact électrique (300, 310a, 411) et la position radiale de l'extrémité (210b) du second frotteur (200b) est identique à celle du second contact électrique (300, 310b, 410),
- le secteur angulaire compris entre les extrémités du premier et du second frotteur est égal au secteur angulaire (α) compris entre les premier et second contacts électriques.

15. Système d'entraînement (620) d'essuie-glace de véhicule comportant un moteur (610) et un boîtier réducteur (600) selon l'une des revendications 12 à 14.

16. Système d'essuyage (9) d'une vitre de véhicule automobile comportant un système d'entraînement (620) selon la revendication 15 et au moins un balai d'essuie-glace (10).

## Patentansprüche

1. Rad (100) für ein Antriebssystem eines Scheibenwischers eines Fahrzeugs, wobei das Rad aus einem nichtleitenden Material hergestellt ist und Schleifbahnen für Schleifkontakte (200a, 200b) sowie Mittel zum elektrischen Kontakt (300, 400) aufweist, wobei ein erstes und ein zweites Mittel zum elektrischen Kontakt (300, 310a, 310b, 410, 411) dieser Mittel zum elektrischen Kontakt in elektrischer Kontinuität stehen, wobei das erste und das zweite Mittel zum elektrischen Kontakt auf einer ersten bzw. zweiten Schleifbahn angeordnet sind und auf diese Weise dafür vorgesehen sind, mit einem jeweiligen Schleifkontakt (200a, 200b) in Kontakt zu kommen, wobei das Rad **dadurch gekennzeichnet ist, dass** die Winkelerstreckung (α) der Mittel zum elektrischen Kontakt in der Ebene des Rades streng kleiner als 360° ist, und dadurch, dass sich die Mittel zum elektrischen Kontakt auf einer Seite des Rades befinden, die dafür vorgesehen ist, einen Kurbeltrieb (603, 604) aufzunehmen.

2. Rad nach Anspruch 1, **dadurch gekennzeichnet, dass** die Winkelerstreckung (α) der Mittel zum elektrischen Kontakt (300, 310a, 310b, 410, 411) in der Ebene des Rades kleiner als 180°, vorzugsweise kleiner als 90° oder sogar kleiner als 45° ist.

3. Rad nach Anspruch 1 oder 2, **dadurch gekennzeichnet, dass** das erste und das zweite Mittel zum elektrischen Kontakt zusammenfallen und eine einzige leitende Kontaktfläche (300) bilden, die vorteilhafterweise radial angeordnet ist.

4. Rad nach einem der Ansprüche 1 oder 2, **dadurch gekennzeichnet, dass** das erste und das zweite Mittel zum elektrischen Kontakt jeweils eine Kontaktfläche (310a, 310b) aufweisen, die durch einen Leiter (310c) verbunden sind.

5. Rad nach einem der Ansprüche 1 oder 2, **dadurch gekennzeichnet, dass** es ein elektrisch leitendes kreisbogenförmiges Segment (410) aufweist, welches das erste Mittel zum elektrischen Kontakt bildet, wobei das kreisbogenförmige Segment einen radialen Vorsprung (411) aufweist, der das zweite Mittel zum elektrischen Kontakt bildet.

6. Rad nach Anspruch 5, **dadurch gekennzeichnet, dass** die Seite des Rades eine erste Bahn (111a) und eine zweite Bahn (111b) für einen jeweiligen Schleifkontakt (200a, 200b) aufweist, wobei die erste Bahn teilweise von dem kreisbogenförmigen Segment (410) gebildet wird und die zweite Bahn teilweise von dem Vorsprung (411) gebildet wird.

7. Rad nach Anspruch 6, **dadurch gekennzeichnet, dass** sich das kreisbogenförmige Segment (410) entlang einer kreisförmigen Rippe (500, 530) erstreckt, die auf der Seite des Rades (100) ausgebildet ist, wobei die kreisförmige Rippe dafür vorgesehen ist, die Schleifkontakte (200a, 200b) elektrisch zu isolieren, wenn sie auf einer jeweiligen Bahn (111a, 111b) des Rades schleifen.

8. Rad nach Anspruch 7, **dadurch gekennzeichnet, dass** die Rippe (500, 530) eine Unterbrechung (501) aufweist, wobei der Vorsprung (411) die Unterbrechung wenigstens teilweise einnimmt.

9. Rad nach einem der Ansprüche 7 oder 8, **dadurch gekennzeichnet, dass** die Rippe (500) eine der Bahnen (111a, 111b) trägt.

10. Rad nach Anspruch 9, **dadurch gekennzeichnet, dass** wenigstens eines der Enden der Unterbrechung (501) eine Rampe (510a, 510b) bildet.

11. Rad nach einem der Ansprüche 7 oder 8, **dadurch gekennzeichnet, dass** sich die Rippe (530) zwischen der ersten und der zweiten Bahn (111a, 111b) erstreckt.

12. Untersetzungsgehäuse (600) für ein Antriebssystem eines Scheibenwischers eines Fahrzeugs, welches ein Rad (100) nach einem der vorhergehenden Ansprüche aufweist.

13. Untersetzungsgehäuse nach Anspruch 12, **dadurch gekennzeichnet, dass** es einen Deckel aufweist, wobei die Innenseite des Deckels einen ersten und einen zweiten Schleifkontakt (200a, 200b) aufweist, die elektrisch leitend sind, wobei ein Ende (210a) des ersten Schleifkontakts dafür vorgesehen ist, mit dem ersten elektrischen Kontakt (300, 310a, 411) in Kontakt zu kommen, und ein Ende (210b) des zweiten Schleifkontakts (200b) dafür vorgesehen ist, mit dem zweiten elektrischen Kontakt (300, 310b, 410) in Kontakt zu kommen, wenn sich das Rad in einer bestimmten Position befindet und der Deckel geschlossen ist.

14. Untersetzungsgehäuse nach Anspruch 13, **dadurch gekennzeichnet, dass**:
- die radiale Position des Endes (210a) des ersten Schleifkontakts (200a) identisch mit derjenigen des ersten elektrischen Kontakts (300, 310a, 411) ist und die radiale Position des Endes (210b) des zweiten Schleifkontakts (200b) identisch mit derjenigen des zweiten elektrischen Kontakts (300, 310b, 410) ist,
- der Winkelsektor, der zwischen den Enden des ersten und des zweiten Schleifkontakts liegt, gleich dem Winkelsektor (α) ist, der zwischen dem ersten und dem zweiten elektrischen Kontakt liegt.

15. Antriebssystem (620) eines Scheibenwischers eines Fahrzeugs, welches einen Motor (610) und ein Untersetzungsgehäuse (600) nach einem der Ansprüche 12 bis 14 aufweist.

16. Scheibenwischersystem (9) für eine Scheibe eines Kraftfahrzeugs, welches ein Antriebssystem (620) nach Anspruch 15 und wenigstens ein Scheibenwischerblatt (10) aufweist.

## Claims

1. Wheel (100) for a vehicle window wiper drive system, said wheel being made of a non-conductive material and comprising friction tracks for sliders (200a, 200b) and electrical contact means (300,400), a first and a second electrical contact means (300, 310a, 310b, 410, 411) of said electrical contact means being in electrical continuity, the first and the second electrical contact means, arranged on a first and a second friction tracks respectively and being adapted to come into contact with a respective slider (200a, 200b), said wheel being **characterized in that** the angular extension (α) of said electrical contact means in the plane of the wheel is strictly less than 360° and said electrical contact means being situated on a face of the wheel intended to receive a linkage (603, 604).

2. Wheel according to Claim 1, **characterized in that** the angular extension (α) of the electrical contact means (300, 310a, 310b, 410, 411) in the plane of the wheel is less than 180°, preferably less than 90°, or even less than 45°.

3. Wheel according to one of Claims 1 or 2, **characterized in that** the first and second electrical contact means are combined and form a single conductive stud (300), advantageously arranged radially.

4. Wheel according to one of Claims 1 or 2, **characterized in that** the first and second electrical contact means each comprise a stud (310a, 310b) connected by a conductor (310c).

5. Wheel according to one of Claims 1 or 2, **characterized in that** it comprises an electrically conductive segment in the form of a circle arc (410) forming the first electrical contact means, said circle arc segment comprising a radial protrusion (411) forming the second electrical contact means.

6. Wheel according to Claim 5, **characterized in that** the face of the wheel comprises a first track (111a) and a second track (111b) for a respective slider (200a, 200b), the first track being partly formed by the circle arc segment (410) and the second track being partly formed by the protrusion (411).

7. Wheel according to Claim 6, **characterized in that** the circle arc segment (410) extends along a circular rib (500, 530) provided on the face of the wheel (100), said circular rib being intended to isolate the sliders (200a, 200b) electrically when they slide on a respective track (111a, 111b) of the wheel.

8. Wheel according to Claim 7, **characterized in that** the rib (500, 530) comprises an interruption (501), the protrusion (411) at least partially occupying said interruption.

9. Wheel according to one of Claims 7 or 8, **characterized in that** the rib (500) carries one of the tracks (111a, 111b).

10. Wheel according to Claim 9, **characterized in that** at least one of the ends of the interruption (501) forms a ramp (510a, 510b).

11. Wheel according to one of Claims 7 or 8, **characterized in that** the rib (530) extends between the first and the second tracks (111a, 111b).

12. Reduction gear housing (600) for a vehicle window wiper drive system comprising a wheel (100) according to any of the preceding claims.

13. Reduction gear housing according to Claim 12, **characterized in that** it comprises a cover, the inner face of said cover comprising a first and a second electrically conductive slider (200a, 200b), one end (210a) of the first slider being intended to come into contact with the first electrical contact (300, 310a, 411) and one end (210b) of the second slider (200b) being intended to come into contact with the second electrical contact (300, 310b, 410) in one position of the wheel and when the cover is closed.

14. Reduction gear housing according to Claim 13, **characterized in that**:
- the radial position of the end (210a) of the first slider (200a) is identical to that of the first electrical contact (300, 310a, 411) and the radial position of the end (210b) of the second slider (200b) is identical to that of the second electrical contact (300, 310b, 410),
- the angular sector contained between the ends of the first and second sliders is equal to the angular sector (α) contained between the first and second electrical contacts.

15. Drive system (620) for a vehicle window wiper, comprising a motor (610) and a reduction gear housing (600) according to any of Claims 12 to 14.

16. System for wiping (9) a motor vehicle window, comprising a drive system (620) according to Claim 15 and at least one wiper blade (10).
